# EUROPÄISCHE PATENTSCHRIFT

(11) **EP 4 158 138 B1**
(45) Veröffentlichungstag und Bekanntmachung des Hinweises auf die Patenterteilung: **07.08.2024**
(21) Anmeldenummer: 21726317.7
(22) Anmeldetag: 05.05.2021
(51) Int. Cl.: E05B 17/00, E05B 81/06, E05B 81/34, E05B 81/42, F16H 19/04, F16H 25/18, F16H 53/06

(54) **ANTRIEBSEINHEIT FÜR KRAFTFAHRZEUG-TECHNISCHE ANWENDUNGEN**
DRIVE UNIT FOR MOTOR VEHICLE APPLICATIONS
UNITÉ D'ENTRAÎNEMENT DESTINÉE À DES APPLICATIONS DE VÉHICULE AUTOMOBILE

(30) Priorität: 29.05.2020 DE 102020114465
(43) Veröffentlichungstag der Anmeldung: 05.04.2023
(73) Patentinhaber: Kiekert AG, 42579 Heiligenhaus (DE)
(72) Erfinder: SZEGENY, Peter, 51766 Engelskirchen (DE); INAN, Ömer, 46282 Dorsten (DE); SCHOLZ, Michael, 45136 Essen (DE); SCHIFFER, Holger, 40668 Meerbusch (DE)
(74) Vertreter: Kiekert AG Patentabteilung
(86) Internationale Anmeldenummer: PCT/DE2021/100407
(87) Internationale Veröffentlichungsnummer: WO 2021/239180

(56) Entgegenhaltungen:
- CN-U- 209 874 769
- JP-A- H0 813 880
- JP-B2- 4 343 548
- JP-U- H0 665 585

## Beschreibung

Die Erfindung betrifft eine Antriebseinheit für kraftfahrzeug-technische Anwendungen, insbesondere Kraftfahrzeug-Schließeinrichtungen, mit einem Elektromotor sowie wenigstens einem vom Elektromotor angetriebenen Antriebselement, und mit einem mit dem Antriebselement wechselwirkenden Betätigungshebel, wobei das Antriebselement und/oder der Betätigungshebel vorteilhaft um eine Achse rotierbar ausgebildet sind, und vorbei zwischen dem Antriebselement und dem Betätigungshebel ein drehbar gelagertes Zwischenelement vorgesehen ist.

Antriebseinheiten für kraftfahrzeug-technische Anwendungen kommen vielfältig zum Einsatz. Sie zeichnen sich durchweg dadurch aus, dass der an dieser Stelle vorgesehene Elektromotor mit Niederspannung (Gleichspannung) betrieben wird und für die Betätigung von Stelleelementen mithilfe des Betätigungshebels oftmals zwischengeschaltete Getriebe zwischen dem Elektromotor und dem Betätigungshebel realisiert werden müssen. Beispielsweise werden mit solchen Antriebseinheiten Fensterheber, Sitz- und Spiegelvorstellungen, Lenkradverstellungen, Kopfstützenverstellungen und insbesondere Kraftfahrzeug-Schließeinrichtungen angesteuert. Bei Kraftfahrzeug-Schließeinrichtungen sorgt die fragliche Antriebseinheit, welche zu diesem Zweck meistens im Innern eines Kraftfahrzeug-Schlosses realisiert ist, dafür, dass ein zugehöriges Gesperre elektrisch geöffnet werden kann. Selbstverständig sind auch andere Anwendungen möglich, beispielsweise dergestalt, dass mithilfe einer solchen Antriebseinheit ein Zuziehantrieb für das Gesperre realisiert wird. Auch die Ansteuerung einer (Zentral-)Verriegelung ist denkbar.

Beim Stand der Technik nach der DE 10 2018 110 700A1 geht es insgesamt um eine Kraftfahrzeug-Schließeinrichtung bzw. ein Kraftfahrzeugschloss, welches mit einem Gesperre aus Drehfalle und Sperrklinke ausgerüstet ist. Außerdem ist ein Auslösehebel realisiert, der die Funktion des Betätigungshebels übernimmt oder übernehmen kann. Ferner findet sich eine elektrische Antriebseinheit mit einem Motor und einer mithilfe des Motors angetriebenen Abtriebsscheibe. Der Auslösehebel kann mithilfe der Abtriebsscheibe betätigt werden, um das Gesperre zu eröffnen.

Ein vergleichbares Kraftfahrzeug-Schloss ist Gegenstand der DE 103 61 168 A1. Auch in diesem Fall ist ein motorischer Antrieb zum motorischen Ausheben der Sperrklinke aus einer Schlossfalle realisiert. Dazu verfügt der motorische Antrieb über ein Antriebsrad und eine Steuerkurve. Die Steuerkurve arbeitet ihrerseits auf ein Eingriffsende eines Antriebsarms eines Mitnehmers, welcher mit der Sperrklinke wechselwirkt.

Beim Stand der Technik nach der DE 10 2018 105 717 A1 geht es ebenfalls um eine Schließeinrichtung für kraftfahrzeugtechnische Anwendungen. Diese verfügt über ein Gesperre mit Drehfalle und Sperrklinke. Außerdem über einen Auslösehebel, wobei mithilfe des Auslösehebels das Gesperre entsperrt werden kann. Außerdem ist ein Dämpfungsmittel zwischen dem Auslösehebel und der elektrischen Antriebseinheit angeordnet. Das Dämpfungsmittel kann als separates Bauteil ausgebildet sein und über eine schwenkbare Lagerung verfügen.

Der Stand der Technik hat sich grundsätzlich bewährt, wenn es darum geht, die typischerweise schnell laufenden Bewegungen des Elektromotors unter Zwischenschaltung des Antriebselementes auf den Betätigungshebel zu übertragen. Mithilfe des Betätigungshebels wird dann ein Stellelement beaufschlagt. Das Stellelement und der Betätigungshebel können dabei grundsätzlich auch starr miteinander verbunden sein oder sogar über eine einstückige Auslegung verfügen. Jedenfalls wird die schnell laufende Drehung des Elektromotors typischerweise in eine langsame Schwenkbewegung des Betätigungshebels umgesetzt, um das Stellelement wunschgemäß zu beaufschlagen.

Bei dem Stellelement kann es sich bei Realisierung beispielsweise einer Antriebseinheit für einen Fensterheber um eine heb- und senkbare Fensterscheibe handeln. Kommt die Antriebseinheit in Verbindung mit einem Spiegel bzw. Kraftfahrzeug-Spiegel zum Einsatz, so ist das Stellelement als Spiegelglas ausgeführt. In der Regel stehen jedoch Anwendungen in Verbindung mit Kraftfahrzeug-Schließeinrichtungen im Fokus, bei denen der Betätigungshebel meistens mittelbar oder unmittelbar auf ein oftmals obligatorisches Gesperre arbeitet. Das kann dergestalt geschehen, dass der Betätigungshebel als Auslösehebel die Sperrklinke von ihrem Eingriff mit der Drehfalle abhebt und als Folge hiervon die Kraftfahrzeug-Schließeinrichtung mithilfe der Antriebseinheit elektromotorisch geöffnet wird.

Daneben ist es aber auch möglich, mithilfe der Antriebseinheit für eine Schließ- oder Zuziehbewegung bei der Kraftfahrzeug-Schließeinrichtung zu sorgen. In diesem Fall arbeitet der Elektromotor über das Antriebselement und den Betätigungshebel beispielsweise mittelbar oder unmittelbar auf die Drehfalle als Bestandteil des Gesperres. Befindet sich die Drehfalle in einer Vorschließstellung bzw. Vorraststellung, so kann auf diese Weise die Drehfalle und mit ihr die gesamte Kraftfahrzeug-Schließeinrichtung in eine Hauptschließstellung bzw. Hauptraststellung überführt werden.

Die gesamten beschriebenen Einsatzzwecke erfordern zur Realisierung der Stellbewegung des Stellelementes und folglich des Betätigungshebels ein mehr oder minder hohes Drehmoment, welches vom schnell laufenden Elektromotor unter Realisierung einer zumeist entsprechend angepassten Untersetzung endseitig des Antriebselementes zur Verfügung gestellt wird, um den Betätigungshebel entsprechend bewegen zu können. An dieser Stelle wird oftmals mit Betätigungsnocken gearbeitet, die mit dem Betätigungshebel im Sinne einer Gleitreibung wechselwirken, wie dies der Stand der Technik nach der DE 10 2018 110 700 A1 oder auch gemäß der DE 103 61 168 A1 vorgibt. Obwohl an dieser Stelle oftmals mit Nocken aus Kunststoff und einem Betätigungshebel aus Stahl gearbeitet wird, sind unverändert Verbesserungen bei der Kraftübertragung und der an dieser Stelle umgesetzten Gleitreibung möglich und erforderlich.

Aus der JP4343548 B2 ist eine gattungsbildende Antriebseinheit gemäß dem Oberbegriff des Anspruchs 1 für kraftfahrzeugtechnische Anwendungen, insbesondere Kraftfahrzeug-Schließeinrichtungen, mit einem Elektromotor sowie wenigstens einem vom Elektromotor angetriebenen Antriebselement, und mit einem mit dem Antriebselement wechselwirkenden Betätigungshebel in der Form einer Sperrklinke eines Gesperres, wobei an dem Antriebselement oder der Sperrklinke ein drehbar gelagertes Zwischenelement vorgesehen ist, bekannt. Das Zwischenelement ist als reibungsverminderndes Wälzelement ausgebildet.

Der Erfindung liegt dementsprechend das technische Problem zugrunde, eine derartige Antriebseinheit für kraftfahrzeug-technische Anwendungen so weiterzuentwickeln, dass ein alternativer reibungsoptimierter Betrieb zur Verfügung gestellt wird.

Zur Lösung dieser technischen Problemstellung schlägt die Erfindung bei einer Antriebseinheit für kraftfahrzeug-technische Anwendungen vor, dass das Zwischenelement zwischen dem Antriebselement und dem Betätigungshebel in an sich bekannter Weise als reibungsminderndes Wälzelement ausgebildet ist, wobei in kennzeichnender Weise eine Betätigungsrampe an einem Exzenternocken in einer Wendelebene verläuft. Erfindungsgemäß kommt es also zwischen dem Antriebselement und dem mithilfe des Antriebselementes beaufschlagten Betätigungshebel aufgrund des dazwischen angeordneten und drehbar gelagerten Zwischenelementes bzw. reibungsmindernden Wälzelementes insgesamt zu einer Wälzbewegung und folglich Rollreibung bzw. Wälzreibung. Eine solche Rollreibung ist den Gleitreibungen prinzipbedingt überlegen. Das lässt sich darauf zurückführen, dass beispielsweise zwischen dem Antriebselement (aus Kunststoff) und dem Betätigungshebel (aus Stahl) Gleitreibungszahlen beobachtet werden, die im trockenen Zustand Werte von 0,12 (Stahl auf Stahl) betragen. Demgegenüber ist die erfindungsgemäß realisierte Rollreibung bzw. Wälzreibung mit Reibungszahlen ausgerüstet, die zumindest eine Zehnerpotenz darunter liegen. Beispielsweise beobachtet man für Kugellager aus Stahl Rollwiderstandskoeffizienten von in etwa 0,001. Selbst Autoreifen auf Beton weisen Rollwiderstandskoeffizienten von lediglich 0,01 bis 0,02 auf.

Es wird also deutlich, dass durch das erfindungsgemäß als reibungsminderndes Wälzelement vorgesehene Zwischenelement zwischen dem Antriebselement und dem Betätigungshebel eine besonders verlustarme Kraftübertragung unter Berücksichtigung einer reibungsoptimierten Auslegung zur Verfügung gestellt wird. Dabei sind das Antriebselement und gegebenenfalls der Betätigungshebel um eine Achse rotierbar ausgebildet. Erfindungsgemäß ist das Antriebselement als drehbar um eine Achse ausgelegte Antriebsscheibe ausgelegt.

Der Betätigungshebel ist seinerseits meistens um eine Achse drehbar gelagert. In diesem Fall handelt es sich bei dem Betätigungshebel um einen drehbaren Schwenkhebel. Generell kann der Betätigungshebel aber auch als linearverschiebbarer Schubhebel ausgebildet sein. So oder so kommt es zwischen dem Antriebselement und dem Betätigungshebel zu einer Relativbewegung.

Man beobachtet zwischen dem Antriebselement und dem Betätigungshebel eine rotative Relativbewegung. Denn das Antriebselement und gegebenenfalls der Betätigungshebel sind regelmäßig um eine Achse rotierbar ausgebildet. Meistens ist die Auslegung sogar so getroffen, dass der Betätigungshebel als um eine Achse drehbarer Schwenkhebel ausgelegt ist und zugleich das Antriebselement eine um eine Achse drehbare Antriebsscheibe darstellt. In diesen sämtlichen Fällen sorgt jedenfalls das als reibungsminderndes Wälzelement ausgebildete Zwischenelement zwischen dem Antriebselement und dem Betätigungshebel für die gewünschte Reibungsoptimierung, weil an dieser Stelle keine Gleitreibung sondern vielmehr eine Rollreibung mit demgegenüber deutlich reduziertem Rollwiderstand bzw. viel kleineren Reibungszahlen vorliegt und erfindungsgemäß beobachtet wird. Hierin sind die wesentlichen Vorteile zu sehen.

Erfindungsgemäß ist das Wälzelement drehbar um eine Achse im oder am Betätigungshebel gelagert. Demgegenüber verfügt das Antriebselement über eine Betätigungsrampe, mit welcher das Wälzelement wechselwirkt. Dabei wird zusätzlich so vorgegangen, dass die Achse des Wälzelementes überwiegend parallel zur Oberfläche der fraglichen Betätigungsrampe am Antriebselement orientiert ist. Als Folge hiervon bewegt sich das Wälzelement mit seiner Achse entlang der Betätigungsrampe am Antriebselement, sobald das Antriebselement gegenüber dem Betätigungshebel mithilfe des Elektromotors beaufschlagt wird. Die Bewegung des Wälzelementes entlang der Betätigungsrampe hat dann seinerseits zur Folge, dass der Betätigungshebel beaufschlagt wird. An den Betätigungshebel ist das Stellelement mittelbar oder unmittelbar angeschlossen, so dass hierdurch die gewünschte Stellbewegung realisiert wird.

Die Betätigungsrampe ist an einem Exzenter-Nocken vorgesehen. Dabei verläuft die Betätigungsrampe am Exzenter-Nocken in einer Wändelebene.

Dabei korrespondiert die Wendelebene zu einem dreidimensionalen Verlauf der Betätigungsrampe am Exzenter-Nocken. In diesem Fall sorgt die Wälzbewegung des Wälzelementes entlang der Betätigungsrampe bei einer drehenden Beaufschlagung der Antriebsscheibe dafür, dass der Betätigungshebel wunschgemäß mithilfe des Antriebselementes beaufschlagt wird, um das angeschlossene Stellelement in der gewünschten Richtung zu beaufschlagen. Wie zuvor bereits ausgeführt, kann dabei das Stellelement mittelbar oder unmittelbar an dem Betätigungshebel angeschlossen sein. Im Rahmen der Erfindung ist auch eine einstückige Auslegung von Betätigungshebel und Stellelement denkbar und wird ausdrücklich mit umfasst.

Das Wälzelement als solches ist überwiegend zylindrisch bis tonnenförmig ausgebildet. Außerdem verfügt das Wälzelement über eine zentrale Achse. Die zentrale Achse des Wälzelementes ist dabei, - wie bereits beschrieben - überwiegend parallel zur Oberfläche der Betätigungsrampe am Antriebselement orientiert. Dadurch kommt es zu einer gleichmäßigen und zentrischen Wälzbewegung des Wälzelementes entlang der Betätigungsrampe.

In diesem Zusammenhang kann die Achse bzw. ein die Achse definierender Stift für das Wälzelement als separates Bauteil ausgebildet sein. Hier ist es denkbar, dass die Achse einen in eine Hohlbohrung des Wälzelementes eingreifenden Stift darstellt. Alternativ hierzu können die Achse und das Wälzelement aber auch einstückig ausgelegt werden.

Für die eingesetzten Materialien des Wälzelementes sind verschiedene Varianten denkbar. Beispielsweise kann das Wälzelement aus Metall, insbesondere Stahl, hergestellt werden. Typischerweise und um zusätzlich etwaige Geräuscheimissionen niedrig zu halten, wird jedoch mit einem Wälzelement aus Kunststoff gearbeitet. In diesem Fall lässt sich die einstückig mit dem Wälzelement ausgebildete Achse besonders einfach realisieren, weil es sich um ein einstückiges Kunststoff-Spritzgussteil handelt oder handeln kann.

Darüber hinaus kann das Wälzelement über einen mehrschichtigen Aufbau verfügen. Hier hat es sich als besonders günstig erwiesen, wenn das Wälzelement mit einer Oberflächenbeschichtung ausgerüstet ist, die als Gummilauffläche ausgelegt ist. Bei der Gummilauffläche kann es sich um ein auf oder in die Oberfläche des Wälzkörpers eingelegtes Gummiband, einen Gummiring etc. handeln. Das empfiehlt sich besonders für den Fall, dass der Wälzkörper als solcher metallisch ausgelegt ist.

Im Falle der Realisierung eines Wälzkörpers aus Kunststoff kann ebenfalls und vorteilhaft mit einem mehrschichtigen Aufbau und einer Oberflächenbeschichtung gearbeitet werden. In diesem Fall lässt sich die Gummibeschichtung an den Kunststoff des übrigen Wälzkörpers anformen, kann beispielsweise durch einen Zweikomponenten-Kunststoffspritzgussvorgang aufgebracht werden. In diesem Fall mag der Wälzkörper aus einem thermoplastischen Kunststoff hergestellt werden, während für die Oberflächenbeschichtung ein elastomerer Kunststoff zum Einsatz kommt und beide Kunststoffe durch den beschriebenen Zweikomponenten-Kunststoffspritzgussvorgang miteinander zum Wälzkörper vereinigt werden. Selbstständig sind an dieser Stelle auch andere Materialpaarungen denkbar, beispielsweise ein thermoplastischer Kunststoff für den Wälzkörper und ein Kunststoff mit eingelagerten Verstärkungen wie beispielsweise Glasfasern für die Oberflächenbeschichtung, um hier eine besonders widerstandsfähige Oberfläche zur Verfügung zu stellen.

Im Ergebnis wird eine Antriebseinheit für kraftfahrzeug-technische Anwendungen zur Verfügung gestellt, die sich insbesondere für die Anwendung im Zusammenhang mit Kraftfahrzeug-Schließeinrichtungen eignet. Das lässt sich auf den reibungsoptimierten Betrieb und demzufolge die besonders verlustarme Kraftübertragung vom Elektromotor bis hin zum Betätigungshebel zurückführen. Als Folge hiervon ist beispielsweise ein besonders kraftarmes elektrisches Öffnen der Kraftfahrzeug-Schließeinrichtung ebenso wie ein Zuziehen möglich. Auch andere der zuvor angesprochenen Anwendungsfälle lassen sich mit wenig Kraft bewerkstelligen. Das führt in seiner Konsequenz dazu, dass im Endeffekt mit einem gering dimensionierten Elektromotor gearbeitet werden kann, der zusätzliche Kosten- und Gewichtsvorteile liefert. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Antriebseinheit perspektivisch in einer ersten Variante,
- Fig. 2: die Antriebseinheit nach Fig. 1 in Seitenansicht,
- Fig. 3A und 3B: unterschiedliche Varianten der Lagerung des Wälzkörpers und
- Fig. 4: sowie Fig. 5 weitere nicht unter den Anspruchsgegenstand fallende und darum nicht erfindungsgemäße Ausführungsbeispiele der Antriebseinheit.

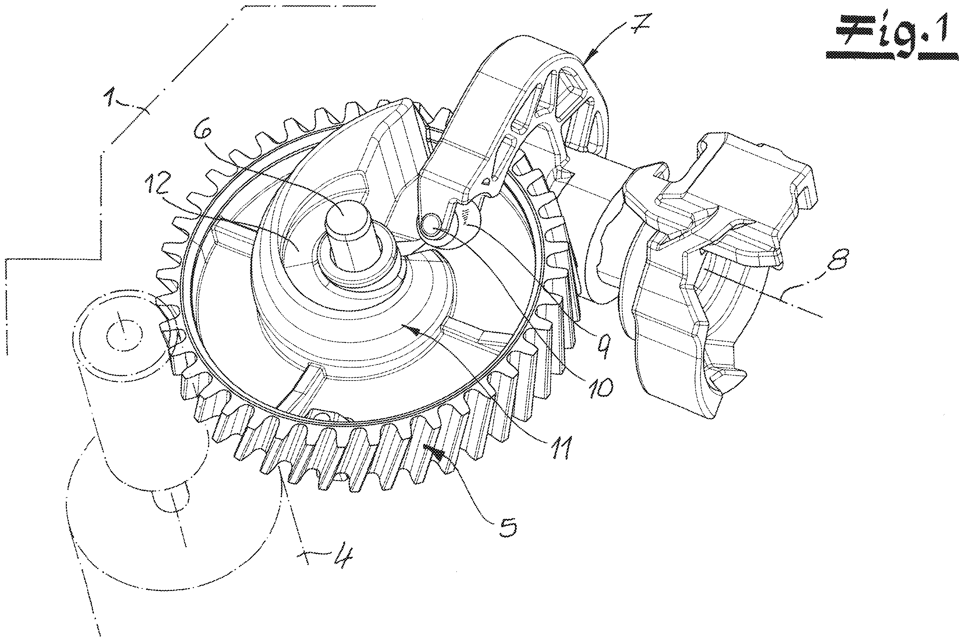

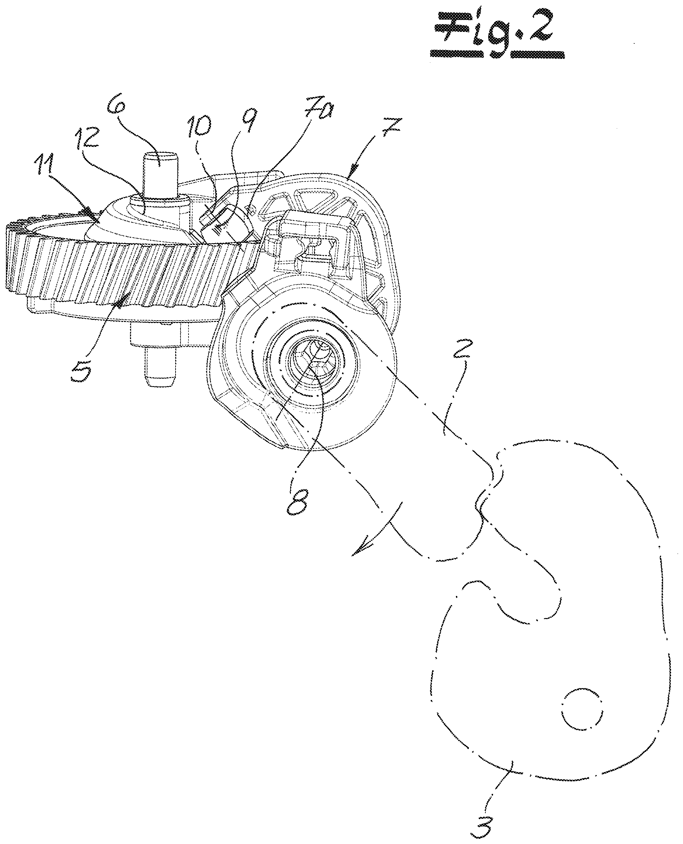

In den Figuren ist eine Antriebseinheit für kraftfahrzeug-technische Anwendungen dargestellt. Tatsächlich kommt die Antriebseinheit bei einer Kraftfahrzeug-Schließeinrichtung und insbesondere einem Kraftfahrzeug-Schloss zum Einsatz. Das Kraftfahrzeug-Schloss verfügt zu diesem Zweck über ein die nachfolgend noch zu beschreibende Antriebseinheit einhausendes und lediglich in der Fig. 1 angedeutetes Gehäuse 1. In dem Gehäuse 1 findet sich neben der fraglichen Antriebseinheit ein Gesperre 2, 3 aus Drehfalle 2 und Sperrklinken 3. Das ist lediglich in der Figur 2 angedeutet. Die Antriebseinheit sorgt nun beispielhaft dafür, dass die Sperrklinke 3 in der Seitenansicht nach der Figur 2 im Uhrzeigersinn verschwenkt wird und auf diese Weise die Drehfalle 2 freigibt, welche daraufhin federunterstützt öffnet. D. h., mithilfe der Antriebseinheit wird vorliegend das Gesperre 2, 3 elektrisch geöffnet. Auf einen derartigen Anwendungsfall ist die nachfolgend noch im Detail zu beschreibende Antriebseinheit jedoch ausdrücklich nicht beschränkt, wie die in der Beschreibungseinleitung aufgeführten und verschiedenen anderen Anwendungsfelder deutlich machen.

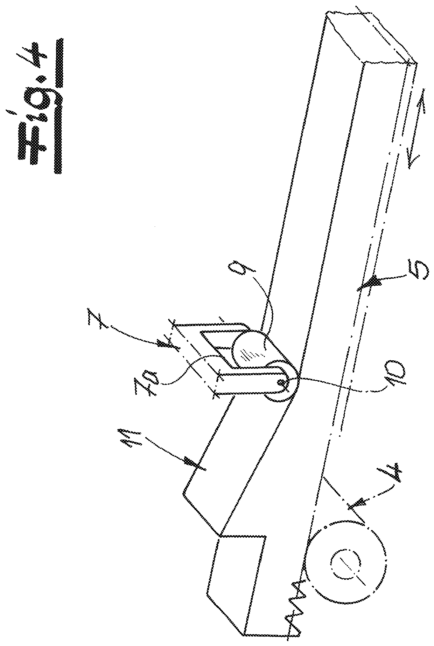

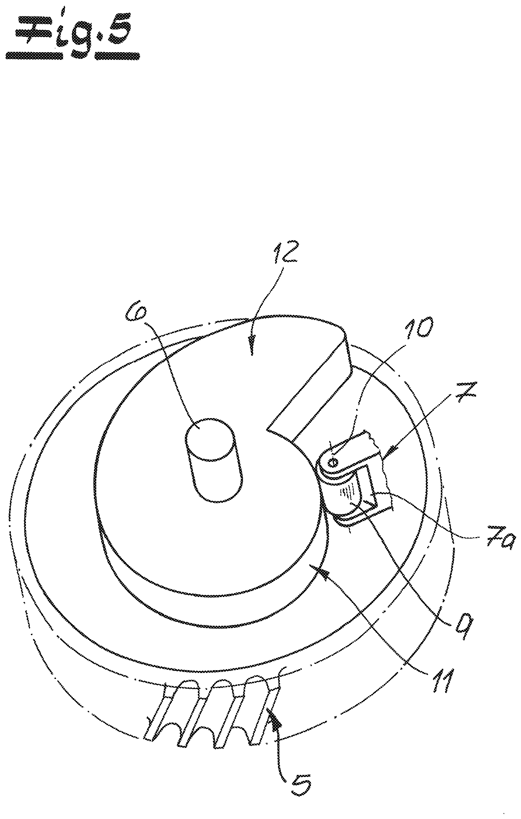

Tatsächlich verfügt die Antriebseinheit über einen Elektromotor 4, mit dessen Hilfe ein vom Elektromotor 4 angetriebenes Antriebselement 5 beaufschlagt wird. Bei dem Antriebselement 5 handelte sich im Rahmen der Varianten nach den Figuren 1, 2 und der nicht erfindungsgemäßen Figur 5 um eine Antriebsscheibe, wohingegen das nicht erfindungsgemäße Ausführungsbeispiel nach der Fig. 4 an dieser Stelle ein Linearstellelement als Antriebselement 5 zeigt. Dementsprechend ist das Antriebselement 5 bzw. die Antriebsscheibe um eine Achse 6 drehbar gelagert.

Mit dem Antriebselement 5 wechselwirkt ein Betätigungshebel 7. Bei dem Betätigungshebel 7 handelt es sich nach dem Ausführungsbeispiel in den Figuren um einen Schwenkhebel, der um eine Achse 8 schwenkbar gelagert ist. Anhand der Fig. 2 erkennt man, dass achsgleich zu der Achse 8 des Betätigungshebels 7 die Sperrklinke 3 an den Betätigungshebel 7 angeschlossen ist, so dass die in der Fig. 2 angedeuteten Schwenkbewegungen der Sperrklinke 3 hervorgerufen durch den Betätigungshebel 7 für das zuvor bereits angesprochene Öffnen des Gesperres 2, 3 sorgen.

Zwischen dem Antriebselement 5 und dem Betätigungshebel 7 ist nun ein drehbar gelagertes Zwischenelement 9 vorgesehen, bei dem es sich erfindungsgemäß um ein reibungsminderndes Wälzelement 9 handelt. Das Wälzelement 9 ist zu diesem Zweck drehbar um eine Achse 10 im oder am Betätigungshebel 7 gelagert. Die Achse 10 des Wälzelementes 9 verläuft überwiegend parallel zur Oberfläche einer Betätigungsrampe 11 am Antriebselement 5.

Beim Ausführungsbeispiel nach den Figuren 1, 2 und der nicht erfindungsgemäßen Figur 5 ist die Betätigungsrampe 11 jeweils an einem Exzenternocken 12 vorgesehen, der ausgehend von der Achse 6 der an dieser Stelle realisierten Antriebsscheibe auf einer Oberflächenseite der Antriebsscheibe ausgebildet ist. Demgegenüber greift die Variante nach der Figur 4 mit dem als Linearstellelement ausgebildeten Antriebselement 5 auf eine in der Längsrichtung des Linearstellelementes orientierte und ausgeprägte Betätigungsrampe 11 zurück. Die Betätigungsrampe 11 am Exzenternocken 12 verläuft beim Ausführungsbeispiel nach den Fig. 1 und 2 in einer Wendelebene, verfügt also über eine räumliche Ausdehnung. Demgegenüber ist die Betätigungsrampe 11 bei dem Ausführungsbeispiel nach der nicht erfindungsgemäßen Fig. 5 als Spiralebene mit einer lediglich flächenmäßigen Ausdehnung am zugehörigen Exzenternocken 12 ausgebildet.

Die Betätigungsrampe 11 bei dem als Linearstellelement ausgelegten Antriebselement 5 bei der nicht erfindungsgemäßen Variante nach der Fig. 4 ist als im Querschnitt Dreiecksrampe ausgebildet. Dabei ist das Linearstellelement insgesamt als Zahnstange ausgelegt, in welche ein in der Fig. 4 im Schnitt angedeutetes Schneckenrad auf der Abtriebswelle des Elektromotors 4 eingreift, um die dort angedeuteten linearen Stellbewegungen in der Längsrichtung des Linearstellelementes bzw. Antriebselementes 5 umsetzen und ausführen zu können.

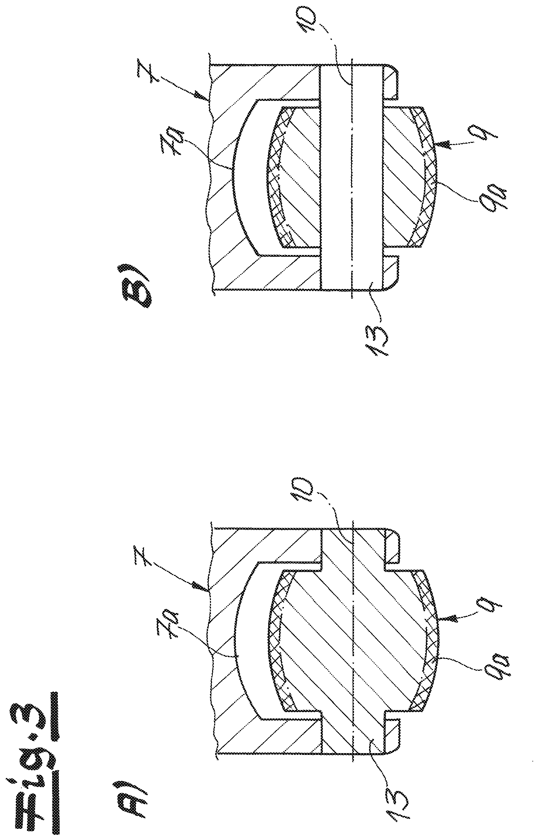

In den Figuren 3A und 3B ist nun das Wälzelement 9 im Detail in verschiedenen Ausprägungen wiedergegeben. Tatsächlich erkennt man, dass das Wälzelement 9 mit einem seine Achse 10 definierenden separaten Stift 13 ausgerüstet ist, wie dies die Fig. 3B wiedergibt. In diesem Fall mag der Stift 13 aus Metall bzw. Stahl hergestellt sein, wohingegen das Wälzelement 9 aus Kunststoff produziert sein mag. Bei der Variante nach der Figur 3A sind der dortige Stift 13 und das Wälzelement 9 als einstückiges Bauteil aus Kunststoff ausgeführt.

In beiden Fällen kann das Wälzelement 9 mit einer lediglich angedeuteten Oberflächenbeschichtung 9a ausgerüstet sein. Als Folge hiervon verfügt das Wälzelement 9 typischerweise über einen mehrschichtigen Aufbau. Die Oberflächenbeschichtung 9a kann beispielsweise als Gummibeschichtung oder auch Kunststoffbeschichtungen ausgeführt sein. Für den Fall, dass der Wälzkörper 9 aus Kunststoff hergestellt ist, empfiehlt sich eine gemeinsame Produktion beider Schichten im Sinne eines Zweikomponenten-Herstellungsvorganges. Hierbei kann so vorgegangen werden, dass der Wälzkörper 9 beispielsweise aus einem thermoplastischen Kunststoff und die Oberflächenbeschichtung 9a aus einem elastomeren Kunststoff gleichzeitig in einem gemeinsamen Zweikomponenten-Kunststoffspritzgussvorgang produziert werden. Das gilt selbst verständlich nur beispielhaft und ist keinesfalls zwingend. So oder so ist das Wälzelement 9 überwiegend zylindrisch bis tonnenförmig mit der zentralen Achse 10 ausgebildet.

Die sämtlichen Ausführungsvarianten des Betätigungshebels 7 nach den Fig. 3A und 3B sind dadurch gekennzeichnet, dass der Betätigungshebel 7 an seinem kopfseitigen und dem Antriebselement 5 zugewandten Ende eine Gabelaufnahme 7a zur Aufnahme und Lagerung des Wälzkörpers 9 aufweist. Die Gabelaufnahme 7a verfügt zu diesem Zweck über zwei Gabelarme, welche zur Lagerung des die Achse 10 des Wälzkörpers 9 definierenden Stiftes 13 dienen. Außerdem erkennt man, dass der Wälzkörper 9 im Querschnitt überwiegend zylindrisch bis tonnenförmig mit der zentralen Achse 10 ausgebildet ist. Auf diese Weise kann die bogenförmige Oberflächenbeschichtung 9a problemlos den unterschiedlichen Formen der Betätigungsrampe 11 folgen und insbesondere der die Wendelebene beschreibenden Betätigungsrampe 11 bei der Ausführungsvariante nach den Fig. 1 und 2.

Auf diese Weise führt eine Beaufschlagung des Antriebselementes 5 jeweils dazu, dass hierbei der Wälzkörper 9 durch die Betätigungsrampe 11 beaufschlagt wird und hierbei der Betätigungshebel 7 eine Schwenkbewegung um seine Achse 8 vollführt. Diese Schwenkbewegung um die Achse 8 wird nach dem Ausführungsbeispiel in den Figuren 1 und 2 in eine in der Figur 2 dargestellte Uhrzeigersinnbewegung der Sperrklinke 3 überführt, welche hierdurch von der Drehfalle 2 freikommt, die ihrerseits federunterstützt öffnet. Anstelle der Sperrklinke 2 kann die Antriebseinheit selbstverständlich auf jedes andere denkbare und mit dem Betätigungshebel 7 mittelbar oder unmittelbar koppelbare Stellelement arbeiten, wie dies in der Einleitung bereits beschrieben worden ist.

### Bezugszeichenliste

Gehäuse 1
Drehfalle 2
Gesperre 2, 3
Sperrklinke 3
Elektromotor 4
Antriebselement 5
Achse 6
Betätigungshebel 7
Gabelaufnahme 7a
Achse 8
Zwischenelement 9
Wälzelement 9
Achse 10
Betätigungsrampe 11
Exzenternocken 12
Stift 13

## Patentansprüche

1. Antriebseinheit für kraftfahrzeug-technische Anwendungen, insbesondere Kraftfahrzeug-Schließeinrichtungen, mit einem Elektromotor (4) sowie wenigstens einem vom Elektromotor (4) angetriebenen Antriebselement (5), und mit einem mit dem Antriebselement (5) wechselwirkenden Betätigungshebel (7), wobei das Antriebselement (5) und gegebenfalls der Betätigungshebel (7) um eine Achse (6, 8) rotierbar ausgebildet sind, und wobei zwischen dem Antriebselement (5) und dem Betätigungshebel (7) ein drehbar gelagertes Zwischenelement (9) vorgesehen ist, wobei
das Zwischenelement (9) als reibungsminderndes Wälzelement (9) ausgebildet ist, wobei das Wälzelement (9) drehbar um eine Achse (10) im oder am Betätigungshebel (7) gelagert ist, wobei die Achse (10) des Wälzelementes (9) überwiegend parallel zur Oberfläche einer Betätigungsrampe (11) am Antriebselement (5) orientiert ist, wobei das Antriebselement (5) als drehbar um eine Achse (6) ausgelegte Antriebsscheibe ausgebildet ist, wobei die Betätigungsrampe (11) an einem Exzenternocken (12) vorgesehen ist, **dadurch gekennzeichnet, dass** die Betätigungsrampe (11) am Exzenternocken (12) in einer Wendelebene verläuft.

2. Antriebseinheit nach Anspruch 1, **dadurch gekennzeichnet, dass** das Wälzelement (9) überwiegend zylindrisch bis tonnenförmig mit der zentralen Achse (10) ausgebildet ist.

3. Antriebseinheit nach einem der Ansprüche 1 oder 2, **dadurch gekennzeichnet, dass** ein die Achse (10) definierender Stift (13) als separates Bauteil oder einstückig mit dem Wälzelement (9) ausgelegt ist.

4. Antriebseinheit nach einem der Ansprüche 1 bis 3, **dadurch gekennzeichnet, dass** das Wälzelement (9) einen mehrschichtigen Aufbau mit zumindest einer Oberflächenbeschichtung aufweist, beispielsweise einer Gummibeschichtung und/oder Kunststoffbeschichtung.

## Claims

1. Drive unit for motor vehicle applications, in particular motor vehicle closing devices, comprising an electric motor (4) and at least one drive element (5) driven by the electric motor (4), and comprising an operating lever (7) interacting with the drive element (5), the drive element (5) and optionally the operating lever (7) being designed so as to be rotatable about an axis (6, 8), and a rotatably mounted intermediate element (9) being provided between the drive element (5) and the operating lever (7),
the intermediate element (9) being designed as a friction-reducing rolling element (9), the rolling element (9) being mounted so as to be rotatable about an axis (10) in or on the operating lever (7), the axis (10) of the rolling element (9) being oriented predominantly in parallel with the surface of an operating ramp (11) on the drive element (5), the drive element (5) being designed as a drive pulley which is rotatable about an axis (6), the operating ramp (11) being provided on an eccentric cam (12), **characterized in that** the operating ramp (11) on the eccentric cam (12) runs in a spiral plane.

2. Drive unit according to claim 1, **characterized in that** the rolling element (9) is predominantly cylindrical to barrel-shaped in relation to the central axis (10).

3. Drive unit according to either claim 1 or claim 2, **characterized in that** a pin (13) defining the axis (10) is formed as a separate component or integrally with the rolling element (9).

4. Drive unit according to any of claims 1 to 3, **characterized in that** the rolling element (9) has a multilayered structure having at least one surface coating, for example a rubber coating and/or plastics coating.

## Revendications

1. Unité d'entraînement pour des applications dans le domaine des véhicules automobiles, en particulier des dispositifs de fermeture de véhicules automobiles, comportant un moteur électrique (4) ainsi qu'au moins un élément d'entraînement (5) entraîné par le moteur électrique (4), et comportant un levier d'actionnement (7) interagissant avec l'élément d'entraînement (5), dans laquelle l'élément d'entraînement (5) et éventuellement le levier d'actionnement (7) sont réalisés de manière à pouvoir tourner autour d'un axe (6, 8), et dans laquelle un élément intermédiaire (9) monté de manière à pouvoir tourner est prévu entre l'élément d'entraînement (5) et le levier d'actionnement (7), dans laquelle
l'élément intermédiaire (9) est réalisé en tant qu'élément roulant (9) réduisant le frottement, dans laquelle l'élément roulant (9) est monté de manière à pouvoir tourner autour d'un axe (10) dans ou sur le levier d'actionnement (7), dans laquelle l'axe (10) de l'élément roulant (9) est orienté principalement parallèlement à la surface d'une rampe d'actionnement (11) sur l'élément d'entraînement (5), dans laquelle l'élément d'entraînement (5) est réalisé en tant que disque d'entraînement conçu pour pouvoir tourner autour d'un axe (6), dans laquelle la rampe d'actionnement (11) est prévue sur une came excentrique (12), **caractérisée en ce que** la rampe d'actionnement (11) s'étend sur la came excentrique (12) dans un plan de retournement.

2. Unité d'entraînement selon la revendication 1, **caractérisée en ce que** l'élément roulant (9) est réalisé de manière à être principalement cylindrique jusqu'à en forme de tonneau avec l'axe central (10).

3. Unité d'entraînement selon l'une des revendications 1 ou 2, **caractérisée en ce qu'**une broche (13) définissant l'axe (10) est conçue en tant que composant séparé ou d'une seule pièce avec l'élément roulant (9).

4. Unité d'entraînement selon l'une des revendications 1 à 3,
**caractérisée en ce que** l'élément roulant (9) présente une structure multicouche comportant au moins un revêtement de surface, par exemple un revêtement en caoutchouc et/ou un revêtement en matière plastique.
